# EUROPÄISCHE PATENTSCHRIFT

(11) **EP 1 181 341 B1**
(45) Veröffentlichungstag und Bekanntmachung des Hinweises auf die Patenterteilung: **27.10.2004**
(21) Anmeldenummer: 00924963.2
(22) Anmeldetag: 28.04.2000
(51) Int. Cl.: C09K 11/06, C07D 215/22, G01N 33/533

(54) **LUMINESZIERENDE 4-TRIFLUORMETHYL-2-CHINOLINONE MIT LANGWELLIGER UV-ABSORPTION UND IHRE VERWENDUNG**
LUMINESCENT 4-TRIFLUOROMETHYL-2-QUINOLONES WITH LONG-WAVE UV-ABSORPTION AND THE USE THEREOF
4-TRIFLUOROMETHYL-2-QUINOLINONES LUMINESCENTES ABSORBANT LES UV A GRANDE LONGUEUR D'ONDE ET UTILISATION DESDITES QUINOLINONES

(30) Priorität: 30.04.1999 AT 77599
(43) Veröffentlichungstag der Anmeldung: 27.02.2002
(73) Patentinhaber: Uray, Georg, 8010 Graz (AT)
(72) Erfinder: URAY, Georg, A-8010 Graz (AT); NIEDERREITER, Karlheinz, A-8010 Graz (AT)
(74) Vertreter: Cunow, Gerda
(86) Internationale Anmeldenummer: PCT/AT2000/000105
(87) Internationale Veröffentlichungsnummer: WO 2000/066680

(56) Entgegenhaltungen:
- US-A- 5 389 600
- US-A- 5 622 821
- FABIAN, WALTER M. F. ET AL: "Substituent effects on absorption and fluorescence spectra of carbostyril" J. MOL. STRUCT. (1999), 477(1-3), 209-220 , XP000956397
- URAY, GEORG ET AL: "Long-wavelength-absorbing and -emitting carbostyrils with high fluorescence quantum yields" HELV. CHIM. ACTA (1999), 82(9), 1408-1417 , September 1999 (1999-09), XP000956220

## Beschreibung

Lumineszierende Cumarine haben weite Verbreitung als Photosensitizer, Laser-Farbstoffe oder pH-Indikatoren in der Biochemie und Medizin gefunden. Es gibt daher zahlreiche experimentelle und theoretische Daten über die Lumineszenzcharakteristik, Photophysik und Photochemie von Cumarin -Derivaten Uber die ähnliche Anwendung der chemisch eng verwandten 2-Chinolinone (Carbostyrile), die als Aza-Analoge der Cumarine angesehen werden können und ebenfalls lumineszieren, gibt es vergleichsweise wesentlich weniger Anwendungsdaten in der Literatur. Dabei wären gerade Carbostyrile photostabiler und chemisch inerter als die Cumarinderivate.
Dieser relative Mangel an Anwendungen als Lumineszenzmarker ist zum Teil darauf zurückzuführen, daß es in scharfem Gegensatz zu den Cumarinen trotz hunderter bekannter Carbostyrilderivate bisher offenbar nicht gelungen ist, die Absorptionswellenlänge gegenüber der unsubstituierten Form (330 nm) wesentlich über den Wert von 350 nm hinaus in den längerwelligen Bereich zu verschieben und gleichzeitig eine starke Erhöhung der Lumineszenzquantenausbeute zu erzielen. Bei Cumarin, das unsubstituiert kurzwelliger als Carbostyril absorbiert, gelingt dies leicht durch Einführung von elektronenliefemden Amino oder Ether Substituenten, hauptsächlich in Position 7.
Im Gegensatz dazu wird beispielsweise in der Serie der 4-Methylcarbostyrile das in Dimethylsulfoxid gemessene langwellige UV Absorptionsmaximum von 331 nm durch eine zusätzliche Methoxy-Funktion in Position 7 sogar zu etwas kürzeren Wellenlänge (328 nm) verschoben.
Die Herstellung von photostabilen und stark lumineszierenden Carbostyrilen mit Absorptionsmaxima über 350 nm wäre durch die effizientere Ausblendung von störenden, kurzwelliger absorbierenden Fremdfluorophoren in komplexer Matrix von wesentlichem Interesse. Bedeutende Anwendungen in der Meßtechnik werden sich für langwelliger absorbierende Carbostyrile durch seit kurzem kommerziell erhältliche äußerst preiswerte LEDs ergeben, die im nahen UV Bereich bei etwa 370 nm emittieren und daher in naher Zukunft gerade in der Sensorentwicklung eine starke Rolle spielen werden.

Das Interesse an lumineszierenden Farbstoffen hat sich in jüngster Zeit auf analytische Anwendungen in der Biochemie konzentriert. Zu den vielversprechendsten Anwendungen gehört der Gebrauch solcher Chromophore für die Herstellung von Lanthaniden-Chelaten, davon vor allem solchen mit Europium- und Terbiumionen. Zu den verwendeten Chromophoren gehören unter anderem bereits bestimmte Carbostyrile, insbesondere N-Acylderivate des 7-Amino-4-methyl-2(1H)-chinolinons ("carbostyril 124). Dieses wurde von M. Li und P. R. Selvin beispielsweise in in J. Am. Chem. Soc., 117 (1995) 8132 und Bioconjugate Chem., 8 (1997) 127 beschrieben. Die Anregung erfolgt hierbei bei 337 nm. Die Möglichkeit von zeitaufgelösten Messungen der langwelligen Lanthanidenemission macht solche Komplexe besonders in biologischen Systemen attraktiv. Sie können zum Beispiel als günstige Alternativen zu den radioaktiven Markierungen (Radioimmunoassays, RIA) und einfachen Fluoroimmunoassays (FIA) Anwendung finden. Bereits eine Routinemethode stellt der sogenannte DELFIA®-Test (dissociation enhanced lanthanide fluorescence immunoassay) dar. Eine weitere Anwendung der zeitaufgelösten Messung von Lanthanidenkomplexen stellt die Verwendung dieser Chelate als Fluoreszenzmarker durch kovalente Bindung an Analyten in biologischer Matrix dar.

### Beschreibung der Erfindung

Die gegenständliche Erfindung löst das Problem der Bereitstellung von längerwellig absorbierenden und stark lumineszierenden Carbostyrilen mit UV-Maxima über 350 nm durch die Einführung eines ganz bestimmten Substituentenmusters der generellen Formel I. Es handelt sich dabei um 4-Trifluormethyl substituierte Chinolin-2-one mit essentiell zwei über Sauerstoff oder Stickstoff gebundenen Substituenten oder Funktionalitäten in Position 6 und 7, die in Summe langwellige Absorptionsmaxima über 350 nm und hohe Emissionsquantenausbeuten in Kombination mit hinreichenden Stoke-Verschiebungen bewirken. Dies war in Hinsicht des langwelligen Maximums durch die an sich eher nachteilige Wirkung einer Methoxygruppe allein in Position 7 (wie oben beschrieben) nicht vorherzusehen.
In einer derartigen Struktur I können ohne bedeutende Änderung der Lumineszenzeigenschaften beispielsweise in Position 1 und 3 zusätzliche Substituenten vorhanden sein, die zur Einführung verschiedener weiterer Funktionalitäten geeignet sind. Ebenso können in Position 6 und 7 die Reste R1 und R2 nützliche Funktionen tragen, die zur Komplexierung eines Metallions oder zur Bindung an reaktionsfähigen Analyten oder zur Immobilisierung an festen Materialien geeignet sind.

Das Potential von Verbindungen der Formel I wird erfindungsgemäß durch die Bindung diverser Seitenketten und Funktionalitäten und die Messung der Absorptionseigenschaften sowie der Lumineszenzcharakteristik erläutert. Die Seitenketten erlauben zum Beispiel die komplexartige Bindung von Europium(III) lonen sowie die Immobilisierung dieser Komplexe an einem Analyten oder an einer festen Matrix. Beispielsweise fuhrt die Nitrierung des 4-Trifluormethyl-6,7-dimethoxycarbostyrils zum 3-Nitroderivat, das nach Reduzierung das entsprechende 3-Aminoderivat ergibt. Eine N(1)-Methylierung der Nitroverbindung und nachfolgende Reduktion zur analogen N(1)-Methyl-3-aminoverbindung oder N(1)-benzyl-3-aminoverbindung oder der N(1 )-phthalimidomethylverbindung ändert die spektralen Eigenschaften nur unwesentlich. Auch die Position 1 ist daher zum Binden weiterer Funktionen, die zum Beispiel später zu einer Immobilisierung fuhren können, geeignet. Beispielsweise kann aber schon das 3-Amino-4-trifluormethyl-6,7-dimethoxycarbostyril mit einem geeigneten Dianhydrid (z.B. Diethylentriaminpentaacetat dianhydrid "DTPA") in Position 3 am Stickstoff acyliert werden. Nach Hydrolyse entsteht eine Tetracarbonsäure, die sich leicht mit Europiumionen komplexieren läßt. Alternativ kann man vor der Hydrolyse des Anhydrids mit einem geeigneten Amin an der zweiten Anhydridfunktion einen Linker durch Amidbildung anbringen, der seinerseits den fertigen Komplex an einen Analyten oder an einen weiteren Chromophor oder auch an eine feste Matrix zu binden vermag. Die Komplexierung mit Lanthanidenionen kann je nach Bedarf vor oder nach der Fertigstellung des Gesamtmoleküls erfolgen. Es ist nach Struktur I, den obigen Erläuterungen sowie den unten angeführten Beispielen offensichtlich, daß komplexbildende Seitenketten an einer der mit R bezeichneten Stellen des Moleküls zu Verbindungen führen, die immer noch die erfindungsgemäße Charakteristik einer gewünschten UV-Absorption über 350 nm aufweisen.

Die grundlegenden photophysikalischen Eigenschaften der mit Eu3+ komplexierten beispielsweisen Verbindung (III) und des zugrundeliegenden Chromophors (I) sind in Abbildung (a) und im experimentellen Teil der Beispiele wiedergegeben. Daraus ist klar ersichtlich, daß nach Anregung bei 370 nm bei den Europiumkomplexen neben der starken Eigenfluoreszenz des Carbostyrils eine ausgeprägte Übertragung der Anregung auf das komplexierte Europiumion stattfindet (sogenannte Antennenwirkung). Eine derartige Übertragung der Anregungsenergie auf Europium ist bei dieser hohen Absorptionswellenlänge, also nach Einstrahlung von Licht mit Wellenlängen über 370 nm, bisher kaum beobachtet worden. Der bisher hauptsächlich als wirksam angesehene Bereich lag etwa zwischen 300 und 350 nm. Europiumionen selbst lumineszieren allein, also ohne Übertragungschromophor, nur aüßerst schwach:
Aus den Beispielen ist auch ersichtlich, daß ein zusätzlich kovalent gebundener oder auch nur beigemengter Farbstoff mit anderer Absorptionswellenlänge (zB. 550nm) diesen Vorgang nicht stört. Im Gegensatz dazu wirkt ein Farbstoff, der im Bereich der Europiumemission (570-710nm) absorbiert, dynamisch quenchend (Lumineszenzintensität und -abklingzeit sinken) und ermöglicht daher den Aufbau eines nahezu beliebigen Sensors. Es muß nur die Bedingung erfüllt sein, daß ein derartiger zusätzlicher Farbstoff als Indikator für die zu messende Veränderung, wie zum Beispiel die Wasserstoffionenkonzentration, wirkt. Ahnliche Effekte ergeben sich natürlich auch durch Protanierung/Deprotonierung des Carbostyrilchromophors an der Carbonylfunktion oder einem direkt an das Carbostyril gebundenen Stickstoffatom, denn damit werden seine spektralen Eigenschaften und folglich seine Antennenwirkung verändert. Zeitaufgelöste Messung des Emissionsspektrums nach etwa einer Mikrosekunde zeigt ausschließlich Europiumbanden (ohne kurzlebiger Untergrundfluoreszenz), deren Abfall in einer Zeitspanne von etwa 2 Millisekunden ebenfalls zum Meßprinzip werden kann. Dies beweist die Anwendbarkeit dieses Komplextyps für zeltaufgelöste Lumineszenzmessungen auch bei stark fluoreszierendem Untergrund.

### Beispiele

### Beispiel 1

### 6,7-Dimethoxy-4-trifluormethyl-2-(1H)-chinolinon und das analoge ringgeschlossene 6,7-Methylendioxy-4-trifluormethyl-2-(1H)-chinolinon:

8.5 g Trifluormethylacetessigester werden mit 1.77g 3,4-Dimethoxyanilin versetzt und 30 min zum Sieden erhitzt. Der gebildete Alkohol und überschüssiges Reagens werden abdestilliert, es werden 5ml halbkonzentrierte Schwefelsäure zugegeben und 10 min auf 100 Grad C erhitzt. Die Mischung wird auf Wasser gegossen und der gebildete Niederschlag wird aus Ethanol umkristallisiert. Ausbeute 80%, Fp. 272 Grad C, UV λ max 367nm, emissions maximum 440 nm (DMSO), IR, (KBR) CO: 1675 cm-1. Analog kann aus 3,4-Methylendioxyanilin die Verbindung 6,7-Methylendioxy4-trifluormethyl-2-(1H)-chinolinon hergestellt werden. Fp. 288-290°C, UV λ max 367nm (DMSO), Emissions max 438 nm (DMSO), IR (KBR) CO: 1675 cm-1.

### Beispiel 2

### 6,7-Dimethoxy-3-nitro -4-trifluormethyl-2-(1H)-chinolinon:

3.5g 6,7-Dimethoxy-4-trifluormethyl-2-(1H)-chinolinon werden mit 50 ml einer halbkonzentrierten Mischung von Salpetersäure und Schwefelsäure unter Eiskühlung nitriert. Die Mischung wird auf Raumtemperatur erwärmt und auf Wasser gegossen. Der gebildete Niederschlag wird mit Flash-Chromatographie gereinigt (Kieselgel, Dichlormethan-Aceton 9:1) . Ausbeute 70%, Fp 270 °C, UV λ max 391 nm (DMSO), IR (KBR) CO: 1670cm-1.

### Beispiel 3

### 3-Amino-6,7-dimethoxy-4-trifluormethyl-2-(1H)-chinolinon:

1.1g 6,7-Dimethoxy-3-nitro -4-Trifluormethyl-2-(1H)-chinolinon in 200 ml Ethanol werden 24 Stunden bei 50°C und 3 bar Wasserstoffdruck mit Platin (IV) oxid reduziert. Aus Toluol resultieren 0.83g (85%) Aminoverbindung. Fp 221°C, UV λ max 350nm (DMSO), Emissions max 431 nm (DMSO), IR (KBr) 3520, 3405 (NH2); 1620 (CO).

### Beispiel 4

### 6-Amino-7-methoxy-4-trifluormethyl-2-(1H)-chinolinon und das 6-Amino-7-hydroxy-4-trifluormethyl-2-(1H)-chinolinon:

3g Trifluormethylacetessigester werden mit 0.60g 3-Methoxy-4-nitroanilin versetzt und 30 min zum Sieden erhitzt. Der gebildete Alkohol wird abdestilliert und der bei Raumtemperatur gebildete Niederschlag abgesaugt. Ausbeute: 0.83g (76%) 4,4,4-Trifluoracetoacetyl-3-methoxy-4-nitroanilid. 0.83g 4,4,4-Trifluoracetoacetyl-3-methoxy-4-nitroanilid werden portionsweise in 11,5g 110°C heiße Polyphosphorsäure eingerührt und 30 min bei 115°C gerührt. Danach wird auf Wasser gegossen und der gebildete Niederschlag aus Ethanol umkristallisiert. Ausbeute: 0.26g (33%), Fp 273-75°C (EtOH, dec). 7-methoxy-6-nitro-4-trifluormethyl-2-(1H)-chinolinon. 0.26g dieser Verbindung werden in 30mL Ethanol suspendiert und 20 Stunden bei 40°C mit H₂/PtO₂ (3 bar Wasserstoffdruck) reduziert. Das isolierte Rohprodukt wird mit Flash-Chromatographie gereinigt (Kieselgel, Toluol-Aceton 1:1). Ausbeute: 0.183g (82%). Fp 238°C (Toluol, dec), UV λ max 400 nm (DMSO), emissions max 517nm (DMSO), IR (KBr) 3410, 3320 (NH2); 1670 (CO).
Etherspaltung mit konzentrierter HBr führt zur Hydroxyverbindung 6-Amino-7-hydroxy-4-trifluormethyl-2-(1H)-chinolinon, UV λ max 396 nm (Ethanol).

### Beispiel 5

### 7-Methoxy-6-acetylamino-4-trifluormethyl-2-(1H)-chinolinon:

27,85mg 7-methoxy-6-amino-4-trifluormethyl-2-(1H)-chinolinon werden in 0,5mL Eisessig gelöst, mit 0,15mL Acetanhydrid versetzt und 2 Stunden bei 20°C zur Reaktion gebracht. Nach Abziehen des Lösungsmittels wird der Rückstand mit Flash-Chromatographie (Kieselgel, Toluol/Aceton 1:1) gereinigt. Ausbeute: 30,7mg (99%). Fp 280°C (Toluol, dec), UV λ max 368nm, emissions max 448nm, IR 1680 (CO).

### Beispiel 6

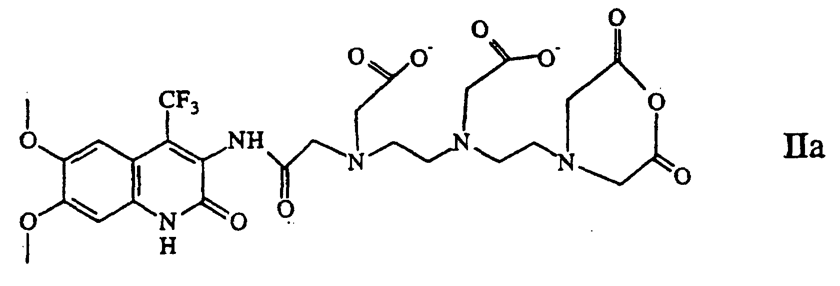

Umsetzung von 3-Amino-6,7-dimethoxy-4-trifluormethyl-2-(1H)-chinolinon mit Diethylentriaminpentaessigsäuredianhydrid (DTPA-dianhydrid) zu Anhydrid IIa laut allgemeiner Formel II Anspruch 3 , X = NH-CO-CH2 :
3.6g DTPA-Dianhydrid und 0.6g der Aminoverbindung werden in 40 ml abs. Pyridin mit 50mg 4-Pyrrolidinopyridin erhitzt. Nach dem Abkühlen wird mit Ether verdünnt, der gebildete Niederschlag enthält das beschriebene Monoanhydrid (IIa) als Rohprodukt.

### Beispiel 7

Hydrolyse des Anhydrids aus Beispiel 6 zur Tetraessigsäure (IIb) und Messung der Lumineszenzabklingzeit nach Komplexierung mit Europium3+:
Das Anhydrid IIa wird in 5ml Wasser aufgenommen, angesäuert und die gebildeteSäure mittels präparativer HPLC gereinigt. (Gradient Wasser/Acetonitril, Lichrospher 100- RP18, Merck). Ausbeute beider Schritte 50%.
Fp: Zersetzung >180°C, UV λ max 368 nm, emissions max 459nm (Wasser).
Massenspektrum MALOI m/z 663.9 , Sinapinsäure. Komplexierung der Saure (IIb) mit einem Equivalent Eu(III)chlorid bei pH 5-7 führt zu einem Produkt, das nach Anregung bei 370 nm die charakteristische Europiumlumineszenz mit scharfen Banden bei 578, 594, 615, 653 und 693 nm zeigt. Die Messung des Emissionsspektrums nach einer Mikrosekunde ergibt das praktisch idente Europiumspektrum ohne jede Eigenfluoreszenz des Carbostyril-Chromophors. Die Messung der Lumineszenzabklingzeit ergibt 600 Mikrosekunden in Wasser (pH 7) und 990 Mikrosekunden in Dimethylsulfoxid.

### Beispiel 8

Umsetzung des Anhydrids (IIa) mit 4-Nitro-L-phenylalanin und Reduktion zu Aminoverbindung IVa: Allgemeine Formel IV in Anspruch 4, Carbostyril wie Formel IIa:
Das oben beschriebene Anhydrid (IIa), gebildet aus 100mg
3-Amino-6,7-dimethoxy-4-trifluormethyl-2-(1H)-chinolinon wird mit 4ml Pyridin, 250mg 4-Nitro-L-phenylalanin und 3 ml DMSO versetzt. Nach 4 stündigem Erhitzen auf 120 °C wird die Mischung abgekühlt, mit Ether versetzt und der gebildete Niederschlag wird in 15mL Wasser aufgenommen und bei 3-4 bar Wasserstoffdruck bei Raumtemperatur reduziert (Katalysator Pd/C).
Die Aminoverbindung (IVa) wird aus dem Filtrat mittels präparativer HPLC isoliert. Gesamtausbeute ausgehend von 3-Amino-6,7-dimethoxy-4-trifluormethyl-2-(1H)-chinolinon 20% (Gradient Wasser/Acetonitril, Lichrospher 100-RP18, Merck). Fp: Zersetzung >175°, UV λ max 369 nm, emissions max 454nm (DMSO).
Massenspektrum MALDI m/z 826.7 , Sinapinsäure. Komplexierung der Aminoverbindung mit einem Equivalent Eu(III)chlorid bei pH 5-7 führt zu einem Produkt, das nach Anregung bei 370 nm die charakteristische Europiumlumineszenz mit scharfen Banden bei 578, 594, 615, 653 und 693 nm zeigt.

### Beispiel 9

### Umsetzung der Aminoverbindung (IVa) zu Isothiocyanat (Va), allgemeine Formel V In Anspruch 4, Carbostyril wie in Formel IIa:

13 mg (IVa) in 10 ml 0.5M HCl werden zu 7.5 ml Thiophosgen und 1.3 ml CCl₄ gegeben. Die Mischung wird 1 Stunde bei 20 °C gerührt, die wässrige Phase wird 5 mal mit 5 ml Chloroform gewaschen und das später eluierende Produkt wird dann mittels präparativer HPLC gereinigt Komplexierung von (Va) mit einem Equivalent Eu(III)chlorid bei pH 5-7 führt zu einem Produkt, das nach Anregung bei 370 nm die charakteristische Europiumlumineszenz mit scharfen Banden bei 578, 594, 615, 653 und 693 nm zeigt.

### Beispiel 10

### Umsetzung des Isothiocyanats (Va) mit dem Tripeptid Triglycin:

0.1 mg Isothiocyanat wird in Wasser/Acetonitril 90/10 mit 3 Equivalenten Triglycin 16 Std bei 20 Grad umgesetzt. Die Reaktionslösung wird mittels reversed phase HPLC aufgearbeitet und das rascher als das Reagens eluierende Produkt wird bei pH 5-7 mit etwa 1 Equivalent einer wässrigen Eu(III)-chloridlösung versetzt. Der resultierende Komplex zeigt nach Anregung bei 370 nm die charakteristische Europiumlumineszenz mit scharfen Banden bei 578, 594, 615, 653 und 693 nm.

### Beispiel 11

### Umsetzung der Aminoverbindung (IVa) mit Fluoresceinisothiocyanat zum Thioharnstoff und Herstellung eines lumineszierenden Europiumkomplexes mit zusätzlich kovalent gebundenem Fluoresceinchromophor:

1 mg Aminoverbindung (IVa) wird in Wasser/Acetonitril 90/10 mit einem Equivalent Fluoresceinisothiocyanat 16 Std. bei 20 Grad C umgesetzt. Die Reaktionslosung wird mittels reversed phase HPLC aufgearbeitet und das rascher als das Reagens eluierende Produkt wird mit etwa einem Equivalent einer wässrigen Eu(III)-chloridlösung versetzt. Der resultierende Komplex zeigt nach Anregung bei 370 nm neben der Eigenfluoreszenz des Fluoresceinchromophors (Maximum 516nm) nahezu unverändert die charakteristische Europiumlumineszenz mit scharfen Banden bei 578, 594, 615, 653 und 693 nm, wie sie auch ohne Fluorescein zu beobachten war.

### Beispiel 12

Abhängigkeit der Lumineszenzabklingzeit der mit Europium (III) komplexierten Säure (IIb) vom pH in Anwesenheit des Indikatorfarbstoffs Bromthymolblau (BTB):
BTB ist im unprotonierten Zustand blau und im protonierten Zustand gelb. Nur die blaue Form führt zu einer Erniedrigung der Lumineszenzabklingzeit des Europiumkomplexes von Säure (IIb) und den in Beispiel 9 und 10 angeführten, mit Europium komplexierten Derivaten.
Nach Herstellung einer Mischung von BTB mit Säure (IIb) in Wasser wird eine signifikante Abnahme der Lumineszenzabklingzeit zwischen pH 3 und pH 7 beobachtet. Durch Einbetten der Komponenten in eine Sol-Gel-Matrix oder durch Immobilisierung und Wahl eines geeigneten, zwischen 570 und 710 nm absorbierenden Farbstoffs, kann dieser pH Bereich in den jeweils gewünschten Anwendungsbereich verschoben werden.

### Beispiel 13

### 3-Amino-6,7-dimethoxy-1-methyl-4-trifluormethyl-2-(1H)-chinolinon und analoge N-funktionalisierte Derivate des 6,7-dimethoxy-4-trifluormethyl-2-(1H)-chinolinons:

1g 6,7-Dimethoxy-3-nitro-4-trifluormethyl-2-(1H)-chinolinon wird in Aceton mit überschüssigem Kallumkarbonat und zwei Equivalenten Dimethylsulfat 3 h bei 20°C gerührt. Es wird filtriert und eingeengt, das Produkt wird mittels Flash-Chromatographie gereinigt. Fp 254°C. Die Verbindung wird in Ethanol mit 5% Platinoxid und 3 bar Wasserstoffdruck zur entsprechenden 3-Aminoverbindung reduziert. Ausbeute 50% über beide Stufen. Ebenso kann das 1-Phthalimidomethyl-6,7-dimethoxy-3- nitro-4-trifluormethyl-2-(1H)-chinolinon mit Brommethylphthailmid, das 3-Nitro-1-(4-nitrobenzyl)-6,7-dimethoxy -4-trifluormethyl-2-(1H)-chinolinon (Fp 184°C) mit 4-Nitrobenzylbromid hergestellt werden. Die Reduktion von 3-Nitro-1-(4-nitrobenzyl)-6,7-dimethoxy-4-trifluormethyl-2-(1H)-chinolinon mit Platinoxid in Ethanol (2 bar Wasserstoffdruck 5 h) ergibt die entsprechende Diaminoverbindung.

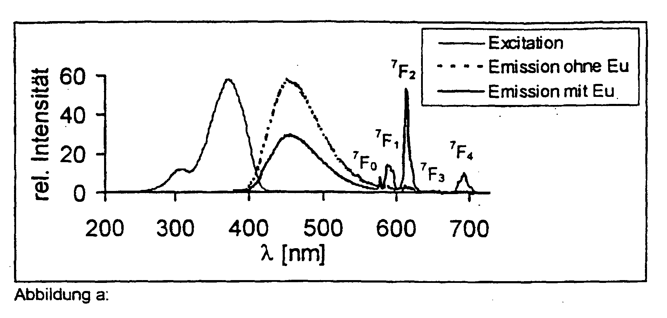

## Patentansprüche

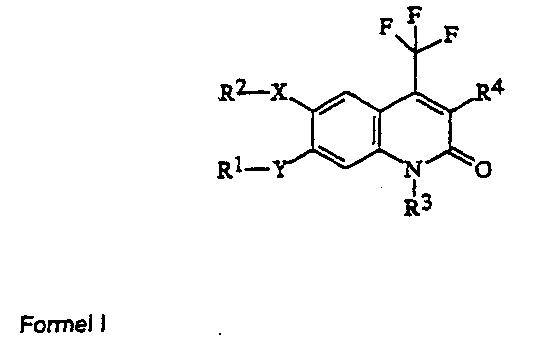

1. Ein substituiertes 4-Trifluormethylcarbostyril gemäß obiger Formel I, **dadurch gekennzeichnet, daß** es ein Absorptionsmaximum zwischen 350 und 420 nm und ein Lumineszenzmaximum zwischen 430 und 900nm aufweist, wobei die bezeichneten Gruppen X und Y die Bedeutung NH, N-Alkyl und Sauerstoff in einer beliebigen Kombination haben, R¹ und R² entweder ein über X und Y gemeinsam gebundenes Methylen, 1,2 Ethylen, 1,3-Propylen bedeutet oder in einer beliebigen Kombination Wasserstoff, Alkyl von C1 bis C11 und gegebenenfalls mit funktionalisierten Gruppen substituiertes Alkyl, das zur Komplexierung von Metallionen geeignet ist oder zur Bindung des Moleküls an passende Gruppen eines Zielmoieküls oder festen Trägermaterials dient, bedeuten und die Reste R3 und R4 neben der des Wasserstoffs die Bedeutung haben, daß entweder einer davon Wasserstoff ist und der andere Rest zur Komplexierung von Metallionen geeignet ist bzw. eine Funktion zur Bindung des Moleküls an passende Gruppen eines Zielmoleküls oder festen Trägermaterials trägt oder daß dieser andere Rest gegebenenfalls eine funktionalisierte Seitenkette trägt die gleichzeitig zur Bindung des Moleküls an funktionelle Gruppen eines Zielmoleküls oder festen Trägermaterials und zur Komplexierung von 3-wertigen Metallionen aus der Gruppe der Lanthaniden geeignet ist, oder daß beide Reste R3 und R4 je eine funktionallsierte Seitenkette, eine zur Bindung des Moleküls an passende Gruppen eines Zielmoleküls oder festen Trägermaterials und eine Seitenkette zur Komplexierung von 3-wertigen Metallionen aus der Gruppe der Lanthaniden bedeuten.

2. Ein substituiertes Trifluormethylcarbostyril nach Anspruch 1 und Formel I, **dadurch gekennzeichnet, daß** X und Y Sauerstoff oder NH oder N-Alkyl bedeutet und daß die Reste R1 und R2 Wasserstoff oder gemeinsames Methylen oder Alkyl von C1 bis C11, R3 Wasserstoff und R4 eine Sauerstoff, Kohlenstoff oder Stickstofffunktion bedeuten.

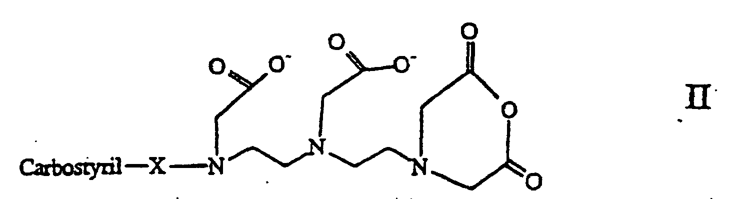

3. Ein substituiertes Trifluormethylcarbostyril nach Anspruch 1, **dadurch gekennzeichnet, daß** es zur Bindung an ein geeignetes Substrat eine Seitenkette wie in Formel II trägt, wobei X- in Formel II die Bedeutung CH2-, CH2-CH2-, O-CH2-CH2-, oder NH-CO-CH2- , oder NCH3-CO-CH2- haben kann und die dazugehörigen Kationen beliebig sein können.

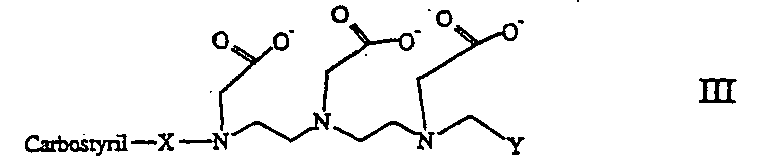

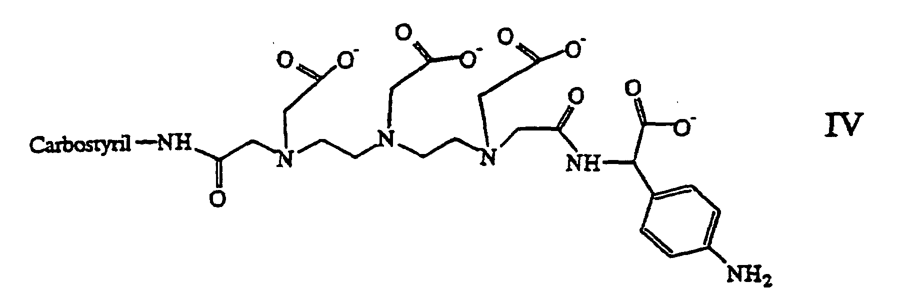

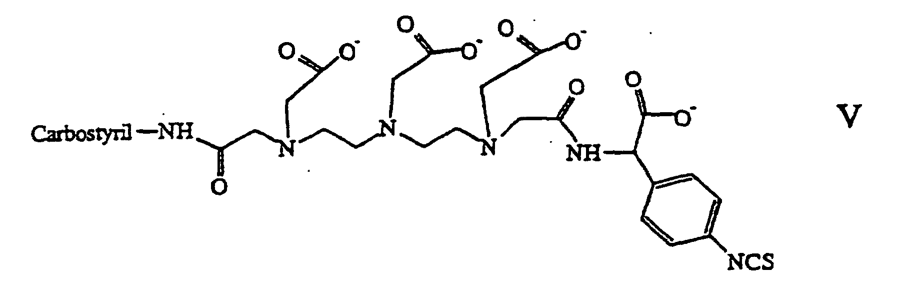

4. Ein substituiertes Trifluormethylcarbostyril nach Anspruch 1, **dadurch gekennzeichnet, daß** es eine Seitenkette wie in Formel III,IV und V trägt, wobei X-in Förmel III die Bedeutung wie in Formel II hat und Y eine Funktion mit einer zusätzlichen Carboxylatgruppe an beliebiger Stelle sein kann und die Kationen bellebig sein kännen.

5. Ein substituiertes Carbostyril nach Anspruch 1, **dadurch gekennzeichnet, daß** dessen Seitenkette mit einem dreiwertigen Europium- oder Terbiumion komplexlert ist.

6. Ein substituiertes Carbostyril nach Anspruch 1 und 5, **dadurch gekennzeichnet, daß** das bei einem Absorptionsmaximum von 350 -420 nm und Einstrahlung in diesem Bereich ein typisches Emissionsspektrum aktivierter Europiumkomplexe zwischen 580 und 900 nm aufweist.

7. Die Verwendung eines substituierten Carbostyrils nach Anspruch 1, 5 und 6 **dadurch gekennzeichnet, daß** es in einer Sol-Gel Matrix oder nach einer eventuellen kovalenten Immobilisierung zur Messung von Lumineszenzspektren herangezogen wird.

8. Die Verwendung nach Anspruch 7, **dadurch gekennzeichnet, daß** das substituierte Carbostyril nach Anspruch 1, 5 und 6 in einer Sol-Gel Matrix oder nach einer eventuellen kovalenten Immobilisierung zur Messung von Lumineszenzspektren nach einer Abklingzeit von 10 bis 3000 Mikrosekunden herangezogen wird.

9. Die Verwendung nach Anspruch 7, **dadurch gekennzeichnet, daß** für das substituierte Carbostyril nach Anspruch 1,5 und 6 Lumineszenz-abklingzeiten im Bereich von 10 - 3000 Mikrosekunden gemessen werden.

10. Die Verwendung nach Anspruch 7 oder 8, **dadurch gekennzeichnet, daß** für das substituierte Carbostyril nach Anspruch 1,5 und 6 Lumineszenzmessungen nach Immobilisierung an einem Zielmolekül oder an einem festen Trägermaterial erfolgen.

11. Methode zur Messung von Lumineszenzeffekten **dadurch gekennzeichnet , daß** ein substituiertes Carbostyril gemäß Anspruch 1 vor oder nach einer eventuellen Immobilisierung mit Europium komplexiert wird und daß an diesem Komplex nach Kontakt mit einem geeigneten Analyten Änderungen der Effekte und Abklingzeiten gemessen werden.

12. Methode zur Messung von Lumineszenzspektren **gekennzeichnet dadurch , daß** ein substituiertes Carbostyril gemäß Anspruch 1 mit Europium3+ komplexiert wird und daß dieser Komplex zusätzlich mit einem direkt gebundenen oder freien Farbstoffmolekül absorbierend im Bereich 580-710 nm als Template in Kontakt gebracht wird und daß nach Kontakt mit einem geeigneten Analyten Lumineszsnzeffekte und Abkilngzeiten gemessen werden.

## Claims

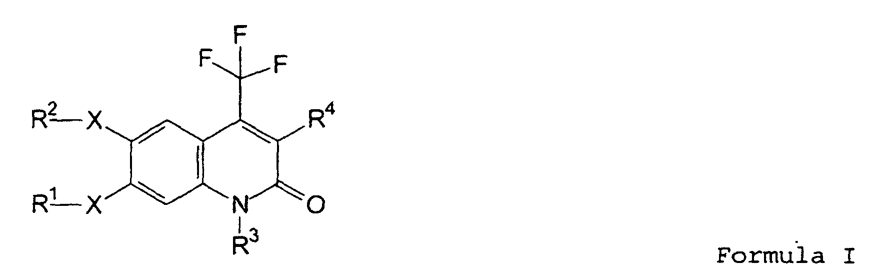

1. A substituted 4-trifluoromethylcarbostyril according to formula 1 above, **characterized by** the fact that it shows an absorption maximum between 350 and 420 nm and a luminescence maximum between 430 and 900 nm, the defined groups X and Y having the meaning NH, N-alkyl and oxygen in any combination, R¹ and R² either means a methylene bound over X and Y together, 1,2-ethylene, 1,3-propylene or in any combination hydrogen, alkyl from C1 to C11 and if necessary alkyl substituted with functionalised groups, which alkyl is suitable for complexing metal ions or serves for binding the molecule to suitable groups of a target molecule or solid carrier material, and the residues R3 and R4 mean, besides hydrogen, that either one of them is hydrogen and the other residue is suitable for complexing metal ions or has a function for binding the molecule to suitable groups of a target molecule or solid carrier material, or that this other residue if necessary carries a functionalised side chain that at the same time is suitable for binding the molecule to functional groups of a target molecule or solid carrier material and for complexing trivalent metal ions of the group of the lanthanides, or that both residues R3 and R4 each mean a functionalised side chain, one for binding the molecule to suitable groups of a target molecule or solid carrier material and a side chain for complexing of trivalent metal ions from the group of the lanthanides.

2. A substituted trifluoromethylcarbostyril according to claim 1 and formula 1, **characterized by** the fact that X and Y means oxygen or NH or N-alkyl and that the residues R1 and R2 mean hydrogen or common methylene or alkyl from C1 to C11, R3 hydrogen and R4 an oxygen, carbon or nitrogen function.

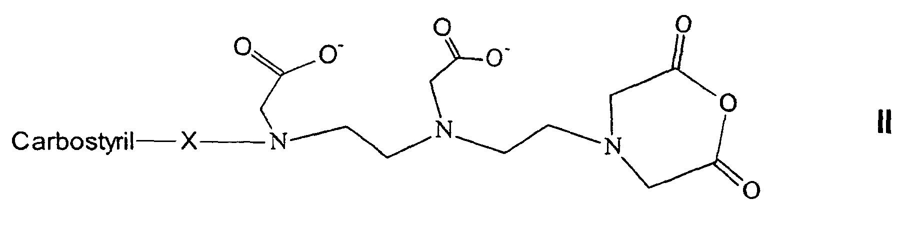

3. A substituted trifluoromethylcarbostyril according to claim 1, **characterized by** the fact that it, for binding to a suitable substrate, carries a side chain like in formula II, in which X in formula II may have the meaning CH2-, CH2-CH2-, O-CH2-CH2-, or NH-CO-CH2-, or NCH3-CO-CH2- the appertaining cations may be any.

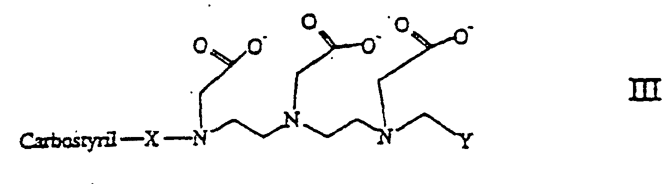

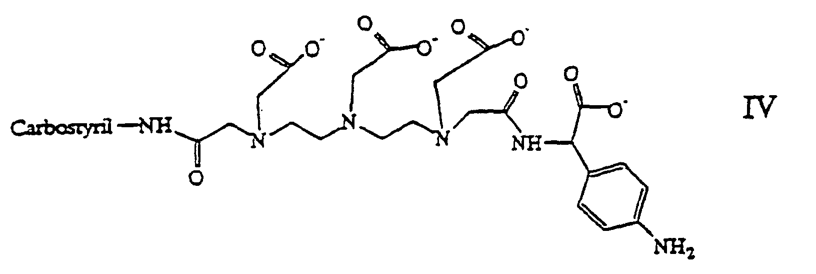

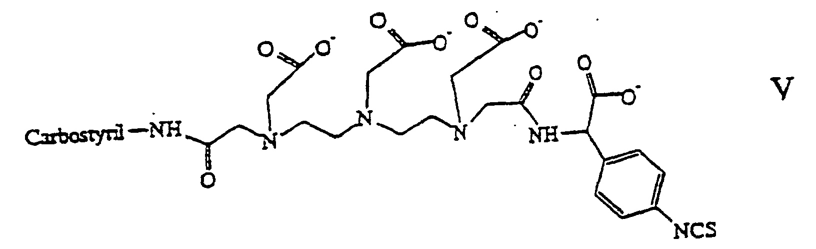

4. A substituted trifluoromethylcarbostyril according to claim 1, **characterized by** the fact that it carries a side chain like in formula III, IV and V, in which X in formula III has the same meaning as in formula II and Y can be a function with an additional carboxylate group at any place and the cations may be any.

5. A substituted carbostyril according to claim 1, **characterized by** the fact that its side chain is complexed with a trivalent europium or terbium ion.

6. A substituted carbostyril according to claim 1 and 5, **characterized by** the fact that, at an absorption maximum of 350-440 nm and emission in the range of 400-570 nm, it shows a typical emission spectrum of activated europium or terbium complexes between 500 and 900 nm.

7. The use of a substituted carbostyril according to claims 1, 5 and 6, **characterized by** the fact that in a sol gel matrix or after an eventual covalent immobilization in a hydrogel the antenna-mediated luminescence of the complexed europium or terbium can excite further dyestuffs absorbing at the emission wavelength.

8. The use according to claim 7 **characterized by** the fact that the substituted carbostyril according to claim 1, 5, and 6 is used in a sol-gel matrix or after an eventual covalent immobilization for the measurement of luminescence spectra after a decay time of 10 to 3000 microseconds.

9. The use according to claim 7 **characterized by** the fact that for the substituted carbostyril according to claim 1, 5, and 6 luminescence decay times in the range of 10 -3000 microseconds are measured.

10. The use according to claim 7 or 8, **characterized by** the fact that for the substituted carbostyril according to claim 1, 5, and 6 luminescence measurements take place after immobilization on a target molecule or on a solid carrier material.

11. Method for the measurement of luminescence effects, **characterized by** the fact that a substituted carbostyril according to claim 1 before or after an eventual immobilization is complexed with europium and that of this complex after contact with a suitable analyte changes of the luminescence effects and decay times are measured.

12. Method for the measurement of luminescence effects **characterized by** the fact that a substituted carbostyril according to claim 1 is complexed with Europium3+ and that this complex additionally is brought into contact with a directly bound or free dye molecule absorbing in the range of 580-710 nm as a template and that after the contact with a suitable analyte the luminescence effects and decay times are measured.

## Revendications

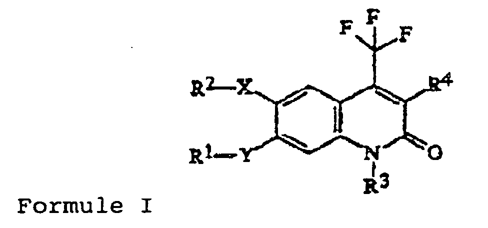

1. 4-trifluorométhylcarbostyryle substitué selon la formule I ci-dessus, **caractérisé en ce qu'**il présente un maximum d'absorption entre 350 et 420 nm et un maximum de luminescence entre 430 et 900 nm, dans lequel les groupes X et Y indiqués ont la signification de NH, N-alkyle et l'oxygène selon une combinaison quelconque, R¹ et R² signifient un groupe méthylène, 1,2-éthylène, 1,3-propylène, reliés ensemble par l'intermédiaire de X et Y, ou, selon une combinaison quelconque, l'hydrogène, un groupe alkyle en C₁ à C₁₁ et éventuellement un groupe alkyle substitué par des groupes fonctionnalisés, qui est approprié pour la complexation d'ions métalliques ou qui sert à la liaison de la molécule à des groupes appropriés d'une molécule cible ou d'une matière de support solide, et les restes R³ et R⁴, en plus de signifier l'hydrogène, ont la signification que l'un d'eux est de l'hydrogène et l'autre reste est approprié à la complexation d'ions métalliques ou porte une fonction pour la liaison de la molécule à des groupes appropriés d'une molécule cible ou d'une matière de support solide ou cet autre reste porte éventuellement une chaîne latérale fonctionnalisée qui est appropriée dans le même temps à la liaison de la molécule à des groupes fonctionnels d'une molécule cible ou d'une matière de support solide et à la complexation d'ions métalliques trivalents du groupe des lanthanides, ou les deux restes R³ et R⁴ signifient chacun une chaîne latérale fonctionnalisée, une pour la liaison de la molécule à des groupes appropriés d'une molécule cible ou d'une matière de support solide et une chaîne latérale pour la complexation d'ions métalliques trivalents du groupe des lanthanides.

2. Trifluorométhylcarbostyryle substitué selon la revendication 1 et la formule I, **caractérisé en ce que** X et Y signifient l'oxygène ou NH ou un groupe N-alkyle et **en ce que** les restes R¹ et R² signifient l'hydrogène ou un groupe commun méthylène ou alkyle en C₁ à C₁₁, R³ signifie l'hydrogène et R⁴ signifie une fonction oxygène, carbone ou azote.

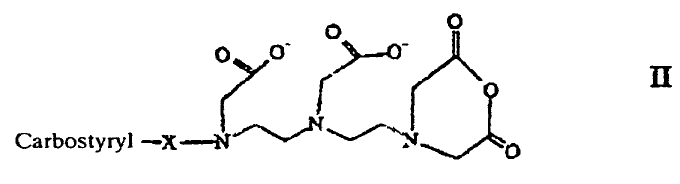

3. Trifluorométhylcarbostyryle substitué selon la revendication 1, **caractérisé en ce qu'**il porte une chaîne latérale comme dans la formule II pour la liaison à un substrat approprié et, dans la formule II, X- peut signifier CH₂-, CH₂-CH₂-, O-CH₂CH₂- ou NH-CO-CH₂- ou NCH₃-CO-CH₂-, et les cations qui s'y rapportent peuvent être quelconques.

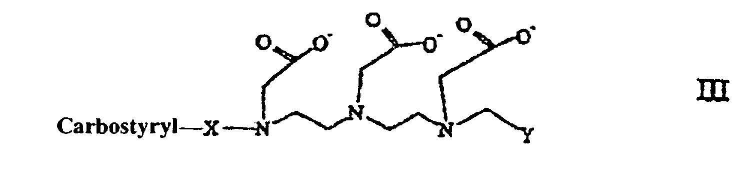

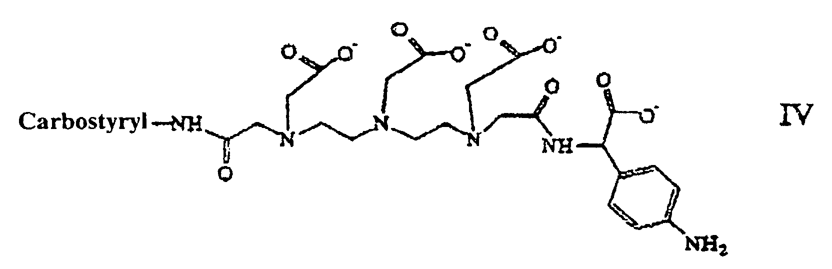

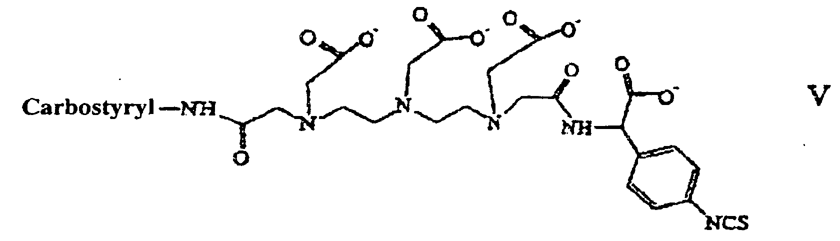

4. Trifluorométhylcarbostyryle substitué selon la revendication 1, **caractérisé en ce qu'**il porte une chaîne latérale comme dans les formules III, IV et V et, dans la formule III, X- a la même signification que dans la formule II et Y peut être une fonction avec un groupe carboxylate supplémentaire en une position quelconque, et les cations peuvent être quelconques.

5. Carbostyryle substitué selon la revendication 1, **caractérisé en ce que** sa chaîne latérale est complexée avec un ion trivalent europium ou terbium.

6. Carbostyryle substitué selon l'une des revendications 1 à 5, **caractérisé en ce que**, à un maximum d'absorption de 350-420 nm et une irradiation dans cette plage, il présente un spectre d'émission typique de complexes activés d'europium entre 580 et 900 nm.

7. Utilisation d'un carbostyryle substitué selon les revendications 1, 5 et 6, **caractérisée en ce qu'**on l'utilise pour la mesure de spectres de luminescence dans une matrice de sol-gel ou après une éventuelle immobilisation par covalence.

8. Utilisation selon la revendication 7, **caractérisée en ce qu'**on utilise le carbostyryle substitué selon les revendications 1, 5 et 6, dans une matrice de sol-gel ou après une éventuelle immobilisation par covalence, pour la mesure de spectres de luminescence après un temps d'extinction de 10 à 3000 microsecondes.

9. Utilisation selon la revendication 7, **caractérisée en ce qu'**on mesure des temps d'extinction de la luminescence dans la plage de 10-3000 microsecondes pour le carbostyryle substitué selon les revendications 1, 5 et 6.

10. Utilisation selon la revendication 7 ou 8, **caractérisée en ce que**, pour le carbostyryle selon les revendications 1, 5 et 6, on effectue des mesures de la luminescence après une immobilisation sur une molécule cible ou sur une matière de support solide.

11. Procédé de mesure d'effets de luminescence, **caractérisé en ce qu'**on complexe un carbostyryle substitué selon la revendication 1 avec de l'europium, avant ou après une éventuelle immobilisation, et **en ce qu'**on mesure des modifications des effets et des temps d'extinction sur ce complexe après un contact avec un analyte approprié.

12. Procédé de mesure de spectres de luminescence, **caractérisé en ce qu'**un carbostyryle substitué selon la revendication 1 est complexé avec de l'europium 3+ et **en ce que** ce complexe est amené en outre au contact d'une molécule de colorant libre ou liée directement, absorbant dans la plage de 580-710 nm, en tant que matrice, et **en ce qu'**après un contact avec un analyte approprié, on mesure les effets de luminescence et les temps d'extinction.
